# EUROPEAN PATENT SPECIFICATION

(11) **EP 2 731 166 B1**
(45) Date of publication and mention of the grant of the patent: **02.12.2015**
(21) Application number: 13172290.2
(22) Date of filing: 17.06.2013
(51) Int. Cl.: H01M 2/10

(54) **Rack for an energy storage system**
Regal für ein Energiespeichersystem
Bâti pour un système de stockage d'énergie

(30) Priority: 13.11.2012 US 201261725646 P; 16.05.2013 US 201313895390
(43) Date of publication of application: 14.05.2014
(73) Proprietor: Samsung SDI Co., Ltd., Yongin-si, Gyeonggi-do (KR)
(72) Inventor: YOUN, Garam, Gyeonggi-do (KR)
(74) Representative: Taor, Simon Edward William

(56) References cited:
- WO-A1-00/30190
- US-A- 5 890 606
- US-A1- 2012 263 989

## Description

Embodiments relate to an energy storage system, which can suppress trays from vibrating in a rack.

An energy storage system can be associated with a new renewal energy and power system, such as a solar cell, and is configured to store power when the power demanded from a load is small and then use the stored power when the demand for power is increased. An example of the energy storage system includes a large quantity of secondary batteries of the type used in electronic devices, such as cellular phones, or notebook computers.

The large quantity of secondary batteries may be accommodated in multiple trays, which are accommodated in a rack. The rack accommodating the trays needs to be designed to secure stability against a vibration, such as earthquake or external shock.

It is a feature of an embodiment to provide an energy storage system, which can suppress trays from vibrating in a rack.

WO0030190 discloses a battery system that comprises a vertically upstanding cell support frame inclusive of a plurality of means for individually vertically supporting at least one lead-acid cells, at least two vertically upstanding members having receptacle means formed for jointly slidably receiving and retaining a plurality of cell vertical support means and manually assemblable means for connectingly maintaining said upstanding members in spaced positional relationship one to another for receipt of said cell support means.

As described above, since the energy storage system according to the present invention includes at least one tray fixing unit inwardly protruding with respect to the guide plate formed between the side frames, the tray supporting unit inserted into the inside of the side frames along the guide plate is vertically fixed, thereby easily preventing the tray supporting unit and the trays from vibrating in the rack.

According to an aspect of the invention, there is provided a rack for an energy storage system as set out in claim 1. Preferred features of this aspect are set out in claims 2 to 13.

According to another aspect of the invention, there is provided an energy storage system as set out in claim 14.
FIG. 1 is a perspective view of an energy storage system according to an embodiment of the present invention;
FIG. 2 is an exploded perspective view of a tray of the energy storage system according to an embodiment of the present invention;
FIG. 3 is a perspective view of a tray supporting unit of the energy storage system according to an embodiment of the present invention;
FIG. 4 is a perspective view of a rack of the energy storage system according to an embodiment of the present invention;
FIG. 5 is an enlarged view of a portion where the tray fixing unit is formed in the rack of the energy storage system according to an embodiment of the present invention;
FIG. 6 illustrates a state in which the tray supporting unit is combined with the tray fixing unit shown in FIG. 5;
FIG. 7 is a cross-sectional view taken along the line A-A' of FIG. 4;
FIG. 8 is a perspective view of a tray fixing unit of the energy storage system according to an embodiment of the present invention;
FIG. 9 is a rear view illustrating a state in which trays formed in the rack are connected in the energy storage system according to an embodiment of the present invention;
FIG. 10 is an enlarged view of a portion where a tray fixing unit is formed in a rack of an energy storage system according to another embodiment of the present invention;
FIG. 11 is a cross-sectional view of a portion where the tray fixing unit is formed in the rack of the energy storage system according to another embodiment of the present invention; and
FIG. 12 is an enlarged view of the tray fixing unit in the energy storage system according to another embodiment of the present invention.

Example embodiments of the present invention will now be described in more detail with reference to accompanying drawings, such that those skilled in the art can easily practice the present invention.

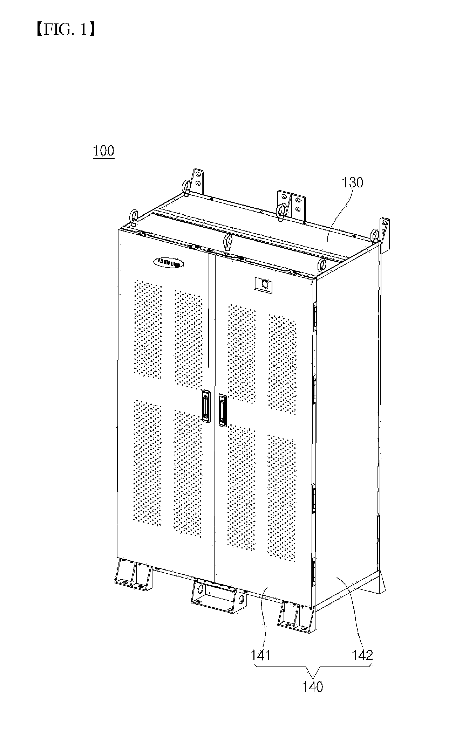

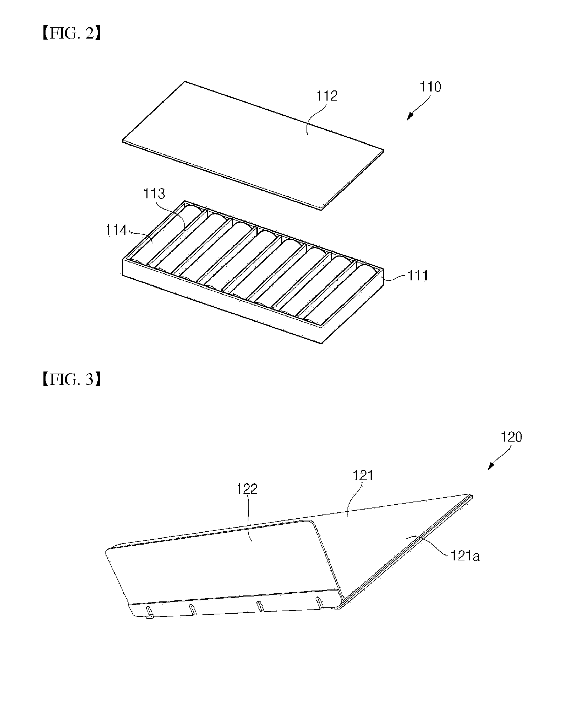

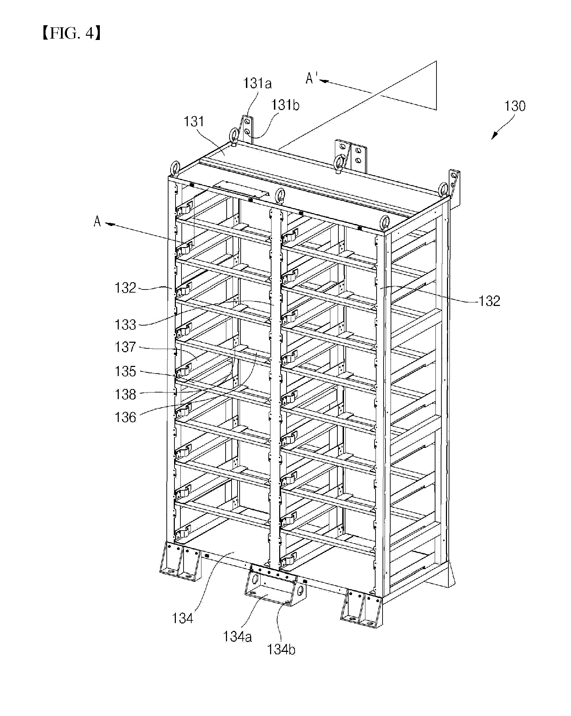

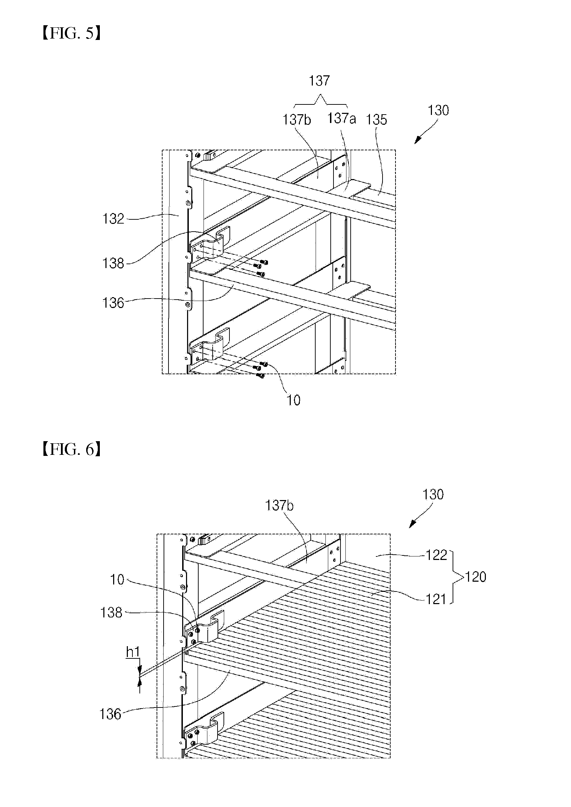

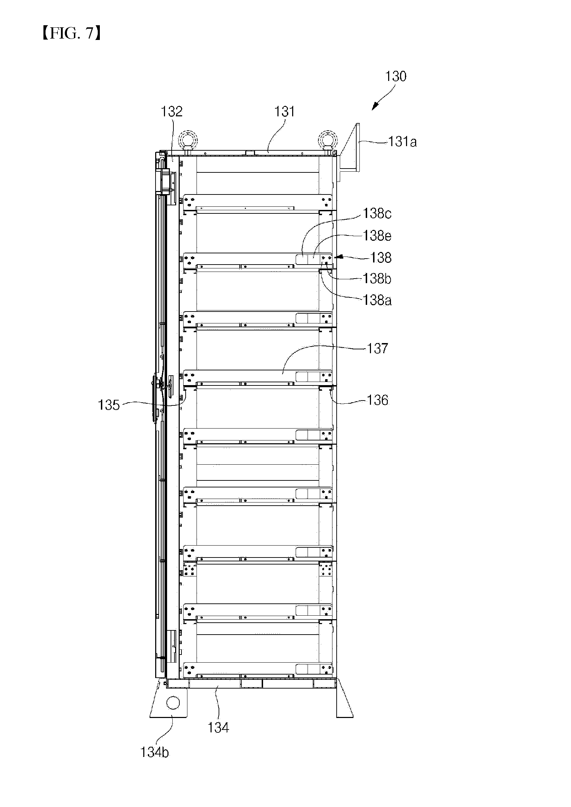

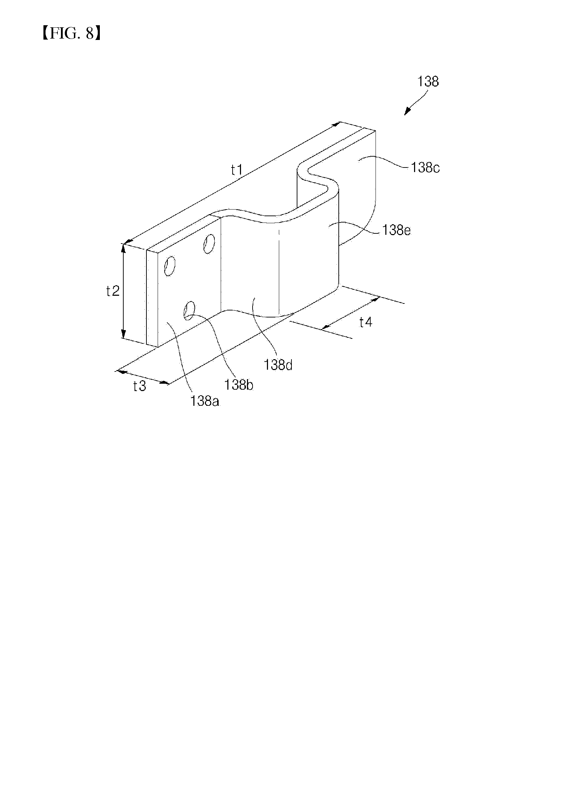

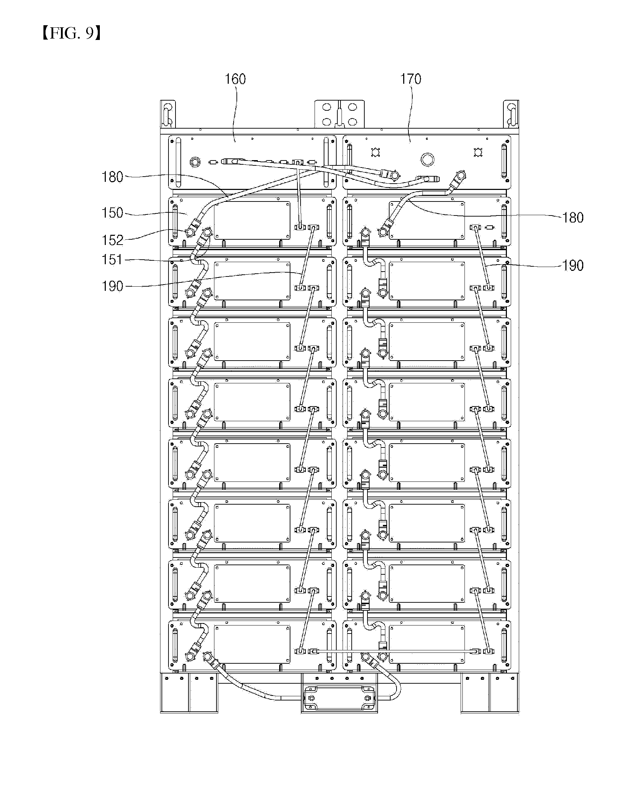

FIG. 1 is a perspective view of an energy storage system according to an embodiment of the present invention, FIG. 2 is an exploded perspective view of a tray of the energy storage system according to an embodiment of the present invention, FIG. 3 is a perspective view of a tray supporting unit of the energy storage system according to an embodiment of the present invention, FIG. 4 is a perspective view of a rack of the energy storage system according to an embodiment of the present invention, FIG. 5 is an enlarged view of a portion where the tray fixing unit is formed in the rack of the energy storage system according to an embodiment of the present invention, FIG. 6 illustrates a state in which the tray supporting unit is combined with the tray fixing unit shown in FIG. 5, FIG. 7 is a cross-sectional view taken along the line A-A' of FIG. 4, FIG. 8 is a perspective view of a tray fixing unit of the energy storage system according to an embodiment of the present invention, and FIG. 9 is a rear view illustrating a state in which trays formed in the rack are connected in the energy storage system according to an embodiment of the present invention.

The energy storage system 100 includes trays 110, a tray supporting unit 120, a rack 130, connector units 150, a battery management box 160, a switch box 170, power supply wires 180 and communication wires 190 In addition, the energy storage system 100 may further include covers 140 coupled to front and side surfaces of the rack 130.

The trays 110 are accommodated in the rack 130 and include a first case 111 and a second case 112. The first case 111 may be shaped of a box having an accommodation space inside and may include a plurality of partitions 113 in the internal space to separately accommodate a plurality of battery cells 114. The second case 112 may be shaped of a plate and may be coupled to the first case 111 accommodating the plurality of battery cells 114. Here, the first case 111 and the second case 112 may be made of an insulating material, such as a plastic material. The number of the trays 110 may be adjusted according to the size of the rack 130. Meanwhile, although not shown, each of the trays 110 may further include a battery management system (BMS) embedded therein to control charging and discharging of the battery cells 114.

In this embodiment, a plurality of tray supporting units 120 are inserted into the rack 130 to be coupled thereto. Each tray supporting unit 120 supports bottom portions of a tray 110, so that the trays 110 can be safely mounted in the rack 130. Positions of the tray supporting units 120 are fixed within the rack 130, thereby allowing the trays no positioned thereon to be safety placed in the rack 130.

In this embodiment, each tray supporting unit 120 includes a first plate 121 formed in one direction to be inserted into the rack 130 and a second plate 122 formed to be perpendicular to the first plate 121. The first plate 121 is inserted into the rack 130, and a position of its side portion 121a is fixed within the rack 130, thereby preventing the trays 110 from vibrating in the rack 130 even with an external vibration applied to the rack 130.

In this embodiment, the rack 130 includes a top frame 131, a pair of side frames 132 downwardly extending from the top frame 131 to be perpendicular to the top frame 131, a middle frame 133 installed between the side frames 132 to be parallel to the side frames 132, and a bottom frame 134 formed at a bottom portion of the rack 130 to be connected to the side frames 132 and the middle frame 133. In addition, the rack 130 includes a plurality of first rack frames 135 installed on a front surface between the top frame 131 and the bottom frame 134 to be parallel to the top frame 131 and the bottom frame 134, and a plurality of second rack frames 136 installed on a rear surface between the top frame 131 and the bottom frame 134.

In addition, the guide plate 137 is further formed widthwise in each of the side frames 132 and the middle frame 133 to connect the first rack frames 135 and the second rack frames 136. The guide plate 137 is formed to have a length corresponding to a distance between each of the first rack frames 135 and each of the second rack frames 136, that is to say, a thickness of the rack 130.

The guide plate 137 may include a first region 137a extending from the first rack frame 135 to the second rack frame 136 on top surfaces of the first rack frame 135 and the second rack frame 136, and a second region 137b vertically bent from the first region 137a. The first region 137a supports the tray supporting unit 120 from the bottom and is fastened to the tray supporting unit 120. The tray supporting unit 120 may move along the first region 137a to be inserted into the rack 130. In addition, the second region 137b is a region to which the following components for fixing the tray supporting unit 120 are coupled.

In this embodiment, the rack 130 includes a tray fixing unit 138 formed inward of the second region 137b of the guide plate 137. The tray fixing unit 138 protrudes on a top portion of the tray supporting unit 120 and supports the top portion of the tray supporting unit 120. Therefore, the tray fixing unit 138 controls vertical vibration of the tray supporting unit 120, thereby controlling vibration of the trays 110. Hence, each tray fixing unit 138 is arranged to constrain movement of a tray 110 in a direction away from the tray supporting unit 120.

In this embodiment, each tray fixing unit 138 and corresponding tray supporting unit 120 forms a shelf unit of the rack 130.

In more detail, the tray fixing unit 138 of this embodiment includes a first region 138a coupled to the second region 137b of the guide plate 137 at its one end. The first region 138a includes at least one hole 138b formed therein to be coupled to the guide plate 137 by external coupling means (e.g., bolts, 10). In other embodiments, each first region 138a may be coupled to the corresponding guide plate 137 by other means.

In addition, the tray fixing unit 138 includes a second region i38c coupled to the second region 137b of the guide plate 137 at the other end symmetrical to the first region 138a. The second region 138c may be maintained at a state in which it is coupled to the guide plate 137 by, for example, welding. In other embodiments, each second region 138c may be coupled to the corresponding guide plate 137 by other means.

Further, the tray fixing unit 138 includes a pair of third regions 138d protruding from the first region 138a and the second region 138c, respectively, and a fourth region 138e formed between the third regions 138d. Since the fourth region 138e protrudes on the top portion of the tray supporting unit 120, vertical vibration of the tray supporting unit 120 can be suppressed. Therefore, it is possible to prevent the tray supporting unit 120 and the trays 110 from vibrating, thereby increasing stability of the energy storage system 100.

Here, a length t1 of the tray fixing unit 138 may be 110 mm or greater. If the length t1 of the tray fixing unit 138 is 110 mm or greater, the tray fixing unit 138 is coupled to the second region 137b of the guide plate 137, and provides for a length long enough to fix the tray supporting unit 120.

In addition, a width t2 of the tray fixing unit 138 may be 30 mm or greater. If the width t2 of the tray fixing unit 138 is 30 mm or greater, a sufficient coupling strength between each of the first region 138a and the second region 138c of the tray fixing unit 138 and the guide plate 137 can be secured.

Further, a height t3 of the third regions 138d protruding from the tray fixing unit 138 may be 10 mm or greater. If the height t3 of the third regions 138d protruding from the tray fixing unit 138 is 10 mm or greater, the tray fixing unit 138 can prevent edges of the side portion 121a of the tray supporting unit 120 from deforming while stably supporting the tray supporting unit 120.

In addition, a length t4 of the fourth region 138e of the tray fixing unit 138 may be 60 mm or greater. If the length t4 of the fourth region i38e of the tray fixing unit 138 is 60 mm or greater, the fourth region 138e can prevent edges of the side portion 121a of the tray supporting unit 120 from deforming while stably supporting the tray supporting unit 120.

In addition, a distance h1 between the tray fixing unit 138 and the tray supporting unit 120 may be 0.5 mm or less. If the distance hi between the tray fixing unit 138 and the tray supporting unit 120 is 0.5 mm or less, the tray supporting unit 120 vertically tightly contacts with the tray fixing unit 138 to be prevented from vertically vibrating, and the side portion 121a of the tray supporting unit 120 can be prevented from deforming due to external vibration.

In such embodiments (e.g. the one shown in FIG. 8), the pair of third regions 138d are formed by bending the tray fixing unit 138. It will, however, be appreciated that the shape of the tray fixing unit 138 described above could be manufactured in a variety of different ways and could take a variety of different forms.

The cover 140 may include a front cover 141 formed on a front surface of the rack 130 and a side cover 142 formed on the side surface of the rack 130. The front cover 141 has hinges formed at both edges to be opened by a user when necessary. In addition, the side cover 142 is coupled to side frames 132 of the rack 130 to protect the trays 110 provided inside.

In this embodiment, the connector units 150 are formed on a rear surface of the rack 130 opposite to the front cover 141. The number of the connector units 150 is equal to that of the trays 110, and the connector units 150 are coupled to the trays 110, respectively, to be electrically connected to the battery cells 114) provided in the trays 110. The connector units 150 provide to the battery cells 114 with paths for charging and discharging operations and communication.

In this embodiment, the battery management box 160 has the same size as the tray 110 to be accommodated in the rack 130. The battery management box 160 includes circuit devices for controlling communications with the respective trays 110. The battery management box 170 can identify states of the battery cells 114 accommodated in the trays 110 through the circuit devices.

In this embodiment, the switch box 170 has the same size as the tray no to be accommodated in the rack 130. The switch box 170 includes a protection circuit device for protecting the battery cells 114. For example, the protection circuit device may be a fuse or switching device that disconnects the flow of current when the current supplied to the battery cells 114 is greater than a current limit of the battery cells 114.

In this embodiment, the power supply wires 180 connect the connector units 150 and the switch box 170. Thus, the power supply wires 180 establish electrical connections between the trays 110 coupled to the connector units 150 while providing charging and discharging paths.

In this embodiment, the communication wires 190 connect the connector units 150, the battery management box 160, and the switch box 170 to one another. The communication wires 190 provide communication paths to allow the battery management box 160 to monitor states of the battery cells 114 provided in the trays 110.

Hereinafter, a configuration of an energy storage system according to another embodiment of the present invention will be described.

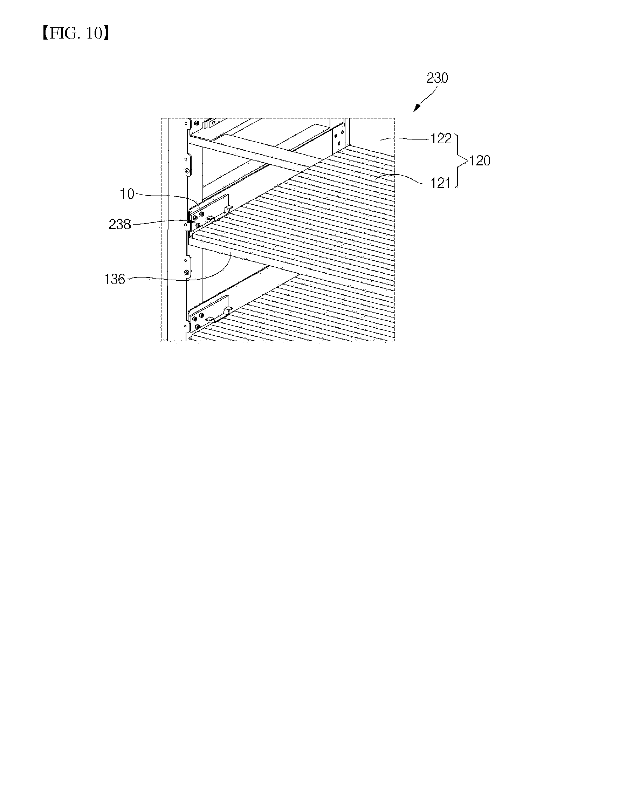

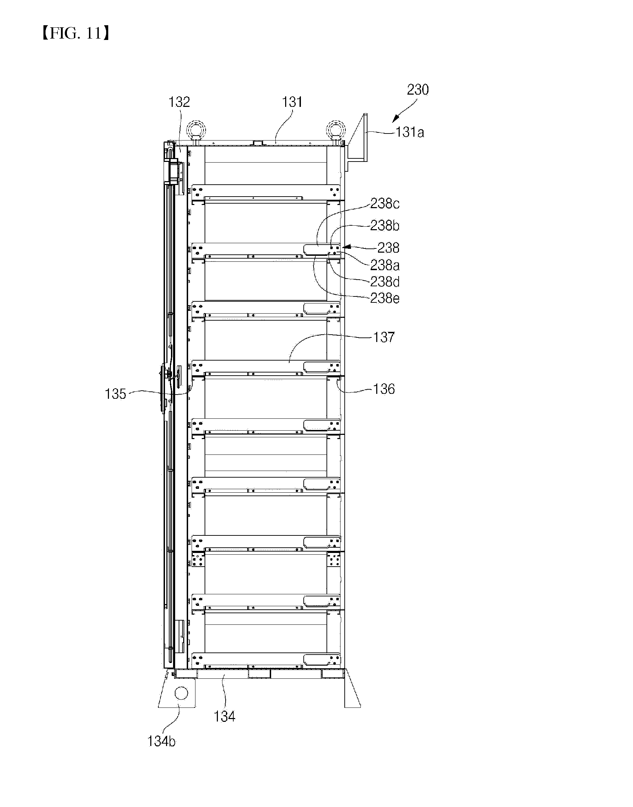

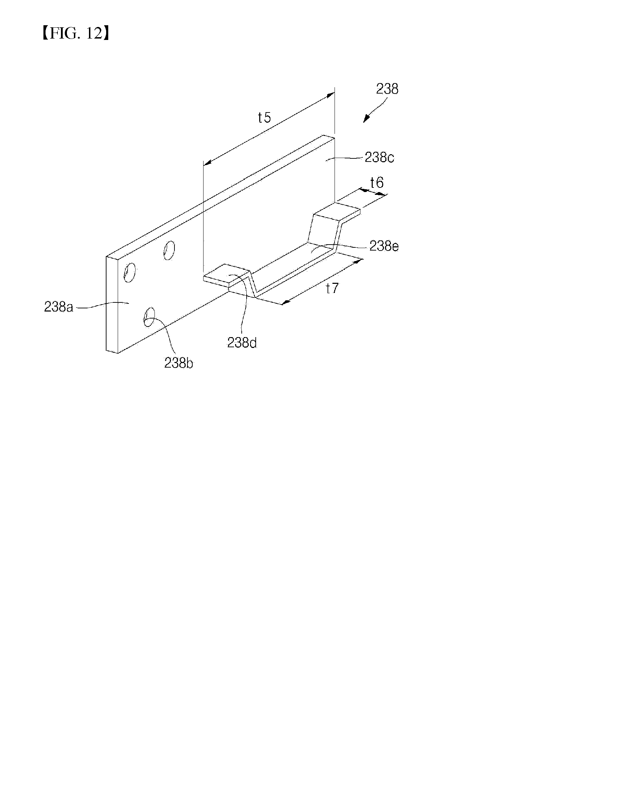

FIG. 10 is an enlarged view of a portion where a tray fixing unit is formed in a rack of an energy storage system according to another embodiment of the present invention, FIG. 11 is a cross-sectional view of a portion where the tray fixing unit is formed in the rack of the energy storage system according to another embodiment of the present invention, and FIG. 12 is an enlarged view of the tray fixing unit in the energy storage system according to another embodiment of the present invention.

The same functional components as those of the previous embodiment are denoted by the same reference numerals, and the following description will focus on differences between the previous and present embodiments.

Referring to FIGS. 10 to 12, the energy storage system according to another embodiment of the present invention includes a rack 230 coupled to tray supporting units 120.

The rack 230 includes tray fixing units 238 coupled to guide plates 137. Each of the tray fixing units 238 includes a first region 238a coupled to a second region 137b of each of the guide plates 137 at its one end, and the first region 238a includes at least one hole 238b. In such a manner, the tray fixing units 238 are coupled to the guide plates 137 through external coupling means. In other embodiments, each first region 238c may be coupled to the corresponding guide plate 137 by other means.

In this embodiment, each tray fixing unit 238 and corresponding tray supporting unit 120 forms a shelf unit of the rack 230.

In this embodiment, the tray fixing unit 238 includes a second region 238c coupled to the guide plate 137 at the other end symmetrical to the first region 238a. The second region 238c may be coupled to the guide plate 137 by, for example, welding. In other embodiments, each second region 238c may be coupled to the corresponding guide plate 137 by other means.

In addition, the tray fixing unit 238 includes a pair of third regions 238d protruding the first region 238a and the second region 238c, respectively, and a fourth region 238e between the third regions 238d to be tilted with respect to the third regions 238d. The fourth region 238e extends in a lengthwise direction of the tray fixing unit 238 and fixes a side portion 121a of the tray supporting unit 120, thereby fixing the tray supporting unit 120 and trays.

Here, a length t5 of each of the third region 238d and the fourth region 238e may be 60 mm or greater. If the length t5 of each of the third region 238d and the fourth region 238e is 60 mm or greater, the fourth region 238e can prevent edges of the side portion 121a of the tray supporting unit 120 from deforming while stably supporting the tray supporting unit 120.

In addition, a height t6 of each of the third regions 238d and the fourth region 238e protruding from the tray fixing unit 238 may be 10 mm or greater. If the height t6 of each of the third regions 238d and the fourth region 238e protruding from the tray fixing unit 238 is 10 mm or greater, the tray fixing unit 238 can prevent edges of the side portion 121a of the tray supporting unit 120 from deforming while stably supporting the tray supporting unit 120.

In addition, a length t7 of the fourth region 238e of the tray fixing unit 238 may be 50 mm or greater. Therefore, the fourth region 238e makes contact with the tray supporting unit 120 sufficiently longer than is necessary, thereby stably supporting the side portion 121a of the tray supporting unit 120.

In such embodiments (e.g. the one shown in FIG. 12), the tray fixing unit 238 comprises a plate formed between the first and second ends, and the pair of third regions 238d and the fourth region 238e are formed by flange protruding from the plate. In such embodiments, a pair of fifth regions respectively protrude from each of the pair of third regions 238d in a direction towards the tray, with the fourth region 138e, 238e arranged between the pair of fifth regions 238d. It will, however, be appreciated that the shape of the tray fixing unit 238 described above could be manufactured in a variety of different ways and could take a variety of different forms.

As discussed above, embodiments of the invention provide a rack for an energy storage system, the rack being for accommodating at least one tray, each tray comprising at least one battery. The rack comprises at least one shelf unit, each shelf unit being arranged to receive a said tray, each shelf unit comprising at least one tray fixing unit arranged to constrain movement of the said tray in a direction away from the shelf unit.

In the embodiments shown in FIGs. 1-12, each shelf unit comprises a tray supporting unit capable of being inserted and removed from the rack. Such tray supporting units comprising a first plate for supporting a tray, with the tray fixing unit being arranged to constrain movement of the tray in a direction away from the first plate.

In other embodiments, the tray supporting units may be arranged in other ways. For example, each tray supporting unit may be integral with the tray. In such arrangements, the bottom surface of the tray could comprise the first plate, with the tray fixing unit being arranged to constrain movement of the tray in a direction away from the first plate.

In other embodiments still, each shelf unit could comprise a plate integral with the rack that supports each tray. In other words, each shelf unit could comprise a plate for supporting a tray, with the tray fixing unit arranged to prevent movement of the tray away from the plate.

In embodiments of the invention, the rack can take various forms. As shown in FIGs. 1-12, the rack 130, 230 can includes a first side frame 133 and a second side frame 133, with each shelf unit comprises a guide plate 137 formed between the first side frame 133 and the second side frame 133. In such arrangements, the rack 130, 230 can further comprise a third side frame 133 and a fourth side frame 133, wherein the first side frame 133 and the second side frame 133 are located on an opposite side of the rack to the third side frame 133 and the fourth side frame 133. In such arrangements, the tray fixing units 138, 238 can inwardly protrude from a first portion 137b of guide plate 137. In such arrangements, the tray supporting unit 120 can be arranged to be inserted into a portion between the side frames 133 along the guide plate 137 and having one end positioned between the guide plate 137 and the tray fixing unit 138, 238. The guide plate 137 can comprises a second portion 137a that is arranged to support the corresponding tray supporting unit 120.

In such arrangements, each shelf unit can comprise a first rack frame 135 connecting the first side frame 133 and the third side frame 133, and a second rack frame 136 connecting the second side frame 133 and the fourth side frame 133. In such arrangements, the first rack frame 135 and the second rack frame 136 are arranged to support the corresponding tray supporting unit 120.

In other embodiments of the invention, the rack can have other forms. For example, the the rack can includes a side frame 133, with the tray fixing units inwardly protruding from a portion of the side frame 133. For example, the rack could have a single side frame comprising a plate shape, with the tray fixing units inwardly protruding therefrom. It will be appreciated that the rack may take a number of shapes.

In some embodiments, such as those shown in Figures 8 and 12, the tray fixing unit 138, 238 includes a first region 138a, 238a coupled to the first portion 137b of the guide plate 137, with the first region 138a, 238a being adjacent a first end of the tray fixing unit 138, 238. A second region 138C, 238c of the tray fixing unit 138, 238 is coupled to the guide plate 137, with the second region 138c, 238c being adjacent a second end of the tray fixing unit 138, 238. A pair of third regions 138d, 238d are provided that respectively protrude from the first region 138a, 238c and the second region 138c, 238c in an inward direction. A fourth region 138e, 238e is provided that is arranged between the pair of third regions 138d, 238d, with the fourth region 138e, 238e arranged to constrain movement of the corresponding tray 110 in a direction away from the first plate 121.

In some embodiments (e.g. the one shown in FIG. 8), the pair of third regions 138d are formed by bending the tray fixing unit 138. In other embodiments (e.g. the one shown in FIG. 12), the tray fixing unit 238 comprises a plate formed between the first and second ends, and the pair of third regions 238d and the fourth region 238e are formed by flange protruding from the plate. In such embodiments, a pair of fifth regions respectively protrudes from each of the pair of third regions 238d in a direction towards the tray, with the fourth region 138e, 238e arranged between the pair of fifth regions 238d.

Embodiments of the invention also provide an energy storage system 100 comprising a rack according to any one of the above mentioned embodiments, and at least one tray 110 accommodated in the rack, each tray 110 comprising at least one battery.

While the energy storage system of the invention has been described in connection with a certain exemplary embodiment, it will be understood by those skilled in the art that the invention is not limited to the disclosed embodiment, but rather is intended to cover various modifications included within the scope of the appended claims.

## Claims

1. A rack (130, 230) for an energy storage system (100), the rack being for accommodating at least one tray (110), each tray (110) comprising at least one battery;
wherein the rack (130, 230) comprises at least one shelf unit, each shelf unit being arranged to receive a said tray, each shelf unit comprising:
a tray supporting unit (120) capable of being inserted and removed from the rack (130, 230), the tray supporting unit (120) comprising a first plate for supporting the said tray (110),
at least one tray fixing unit (138, 238) arranged to constrain movement of the said tray (110) in a direction normal to the first plate;
wherein the rack (130, 230) includes a side frame (132), wherein the at least one tray fixing unit (138, 238) inwardly protrudes from a portion of the side frame (132).

2. A rack (130, 230) according to claim 1, wherein a distance between the tray fixing unit (138, 238) and the first plate (121) is 0.5 mm or less.

3. A rack (130, 230) according to claim 1 or 2, wherein the rack (130, 230) includes a first side frame (133) and a second side frame (133), wherein each shelf unit comprises a guide plate (137) formed between the first side frame (133) and the second side frame (133), wherein the at least one tray fixing unit (138, 238) inwardly protrudes from a first portion (137b) of guide plate (137), wherein the said tray supporting unit (120) is arranged to be inserted into a portion between the side frames (133) along the guide plate (137) and having one end positioned between the guide plate (137) and the tray fixing unit (138, 238).

4. A rack (130, 230) according to claim 3, wherein the rack (130, 230) further comprises a third side frame (133) and a fourth side frame (133), wherein the first side frame (133) and the second side frame (133) are located on an opposite side of the rack to the third side frame (133) and the fourth side frame (133).

5. A rack (130, 230) according to claim 4, wherein each shelf unit comprises:
a first rack frame (135) connecting the first side frame (133) and the third side frame (133); and
a second rack frame (136) connecting the second side frame (133) and the fourth side frame (133);
wherein the first rack frame (135) and the second rack frame (136) are arranged to support the said tray supporting unit (120).

6. A rack (130, 230) according to any one of claims 3 to 5, wherein the guide plate (137) comprises a second portion (137a) that is arranged to support the said tray supporting unit (120).

7. A rack (130, 230) according to any one of claims 3 to 6, wherein the tray fixing unit (138, 238) includes:
a first region (138a, 238a) coupled to the first portion (137b) of the guide plate (137), the first region (138a, 238a) being adjacent a first end of the tray fixing unit (138, 238).
a second region (138c, 238c) coupled to the guide plate (137), the second region (138c, 238c) being adjacent a second end of the tray fixing unit (138, 238);
a pair of third regions (138d, 238d) respectively protruding from the first region (138a, 238c) and the second region (138c, 238c) in an inward direction; and
a fourth region (138e, 238e) arranged between the pair of third regions (138d, 238d), the fourth region (138e, 238e) arranged to constrain movement of the said tray (110) in a direction away from the first plate (121).

8. A rack (130) according to claim 7, wherein the pair of third regions (138d) are formed by bending the tray fixing unit (138).

9. A rack (130) according to claim 8, wherein:
a length (t1) of the tray fixing unit (138) between the first and second ends is 110 mm or greater; and/or
the pair of third regions (138d) are arranged to inwardly protrude by a distance (t3) of 10 mm or greater; and/or
a length (t4) of the fourth region (138e) is 60 mm or greater.

10. A rack (230) according to claim 7, wherein the tray fixing unit (238) comprises a plate formed between the first and second ends, and the pair of third regions (238d) and the fourth region (238e) are formed by flange protruding from the plate.

11. A rack (230) according to claim 10, wherein:
a length of the tray fixing unit (238) between the first and second ends is 110 mm or greater; and/or
the flange is arranged to inwardly protrude by a distance (t6) of 10 mm or greater.

12. A rack (230) according to claim 10 or 11, wherein the tray fixing unit (238) includes:
a pair of fifth regions respectively protruding from each of the pair of third regions (238d) in a direction towards the first plate (121), wherein the fourth region (138e, 238e) is arranged between the pair of fifth regions (238d).

13. A rack (230) according to claim 12, wherein:
a length (t7) of the fourth region (238e) is 50 mm or greater.

14. An energy storage system (100) comprising:
a rack according to any one of claims 1 to 13
at least one tray (110) accommodated in the rack, each tray (110) comprising at least one battery.

## Patentansprüche

1. Regal (130, 230) für ein Energiespeichersystem (100), wobei das Regal zur Beherbergung mindestens einer Ablage (110) dient, wobei jede Ablage (110) mindestens eine Batterie umfasst,
wobei das Regal (130, 230) mindestens eine Regalfacheinheit umfasst, wobei jede Regalfacheinheit so angeordnet ist, dass sie eine Ablage aufnimmt, wobei jede Regalfacheinheit umfasst:
eine Ablagentrageinheit (120), die in das Regal (130, 230) eingeführt und aus diesem entnommen werden kann, wobei die Ablagentrageinheit (120) eine erste Platte zum Tragen der Ablage (110) umfasst,
mindestens eine Ablagenfixiereinheit (138, 238), die so angeordnet ist, dass sie die Bewegung der Ablage (110) in einer senkrecht zu der ersten Platte verlaufenden Richtung einschränkt,
wobei das Regal (130, 230) einen Seitenrahmen (132) einschließt, wobei die mindestens eine Ablagenfixiereinheit (138, 238) von einem Abschnitt des Seitenrahmens (132) nach innen vorspringt.

2. Regal (130, 230) nach Anspruch 1, wobei ein Abstand zwischen der Ablagenfixiereinheit (138, 238) und der ersten Platte (121) 0,5 mm oder weniger beträgt.

3. Regal (130, 230) nach Anspruch 1 oder 2, wobei das Regal (130, 230) einen ersten Seitenrahmen (133) und einen zweiten Seitenrahmen (133) einschließt, wobei jede Regalfacheinheit ein zwischen dem ersten Seitenrahmen (133) und dem zweiten Seitenrahmen (133) ausgebildetes Führungsblech (137) umfasst, wobei die mindestens eine Ablagenfixiereinheit (138, 238) von einem ersten Abschnitt (137b) des Führungsblechs (137) nach innen vorspringt, wobei die Ablagentrageinheit (120) so angeordnet ist, dass sie entlang dem Führungsblech (137) und mit einem Ende zwischen dem Führungsblech (137) und der Ablagenfixiereinheit (138, 238) positioniert in einen Abschnitt zwischen den Seitenrahmen (133) eingeführt wird.

4. Regal (130, 230) nach Anspruch 3, wobei das Regal (130, 230) ferner einen dritten Seitenrahmen (133) und einen vierten Seitenrahmen (133) umfasst, wobei sich der erste Seitenrahmen (133) und der zweite Seitenrahmen (133) auf einer dem dritten Seitenrahmen (133) und dem vierten Seitenrahmen (133) gegenüberliegenden Seite des Regals befinden.

5. Regal (130, 230) nach Anspruch 4, wobei jede Regalfacheinheit umfasst:
einen ersten Regalrahmen (135), der den ersten Seitenrahmen (133) und den dritten Seitenrahmen (133) verbindet, und
einen zweiten Regalrahmen (136), der den zweiten Seitenrahmen (133) und den vierten Seitenrahmen (133) verbindet,
wobei der erste Regalrahmen (135) und der zweite Regalrahmen (136) so angeordnet sind, dass sie die Ablagentrageinheit (120) tragen.

6. Regal (130, 230) nach einem der Ansprüche 3 bis 5, wobei das Führungsblech (137) einen zweiten Abschnitt (137a) umfasst, der so angeordnet ist, dass er die Ablagentrageinheit (120) trägt.

7. Regal (130, 230) nach einem der Ansprüche 3 bis 6, wobei die Ablagenfixiereinheit (138, 238) einschließt:
einen an den ersten Abschnitt (137b) des Führungsblechs (137) gekoppelten ersten Bereich (138a, 238a), der zu einem ersten Ende der Ablagenfixiereinheit (138, 238) benachbart ist,
einen an das Führungsblech (137) gekoppelten zweiten Bereich (138c, 238c), der zu einem zweiten Ende der Ablagenfixiereinheit (138, 238) benachbart ist,
zwei dritte Bereiche (138d, 238d), die von dem ersten Bereich (138a, 238a) bzw. dem zweiten Bereich (138c, 238c) nach innen vorspringen, und
einen zwischen den beiden dritten Bereichen (138d, 238d) angeordneten vierten Bereich (138e, 238e), der so angeordnet ist, dass er die Bewegung der Ablage (110) in einer von der ersten Platte (121) weg verlaufenden Richtung einschränkt.

8. Regal (130) nach Anspruch 7, wobei die beiden dritten Bereiche (138d) durch Biegen der Ablagenfixiereinheit (138) gebildet sind.

9. Regal (130) nach Anspruch 8, wobei:
eine Länge (t1) der Ablagenfixiereinheit (138) zwischen dem ersten Ende und dem zweiten Ende 110 mm oder mehr beträgt und/oder
die beiden dritten Bereiche (138d) so angeordnet sind, dass sie um eine Strecke (t3) von 10 mm oder mehr nach innen vorspringen, und/oder
eine Länge (t4) des vierten Bereichs (138e) 60 mm oder mehr beträgt.

10. Regal (230) nach Anspruch 7,
wobei die Ablagenfixiereinheit (238) eine zwischen dem ersten Ende und dem zweiten Ende ausgebildete Platte umfasst und die beiden dritten Bereiche (238d) und der vierte Bereich (238e) durch einen von der Platte vorspringenden Flansch gebildet sind.

11. Regal (230) nach Anspruch 10, wobei:
eine Länge der Ablagenfixiereinheit (238) zwischen dem ersten Ende und dem zweiten Ende 110 mm oder mehr beträgt und/oder
der Flansch so angeordnet ist, dass er um eine Strecke (t6) von 10 mm oder mehr nach innen vorspringt.

12. Regal (230) nach Anspruch 10 oder 11, wobei die Ablagenfixiereinheit (238) einschließt:
zwei fünfte Bereiche, die jeweils von jedem der beiden dritten Bereiche (238d) in Richtung der ersten Platte (121) vorspringen, wobei der vierte Bereich (138e, 238e) zwischen den beiden fünften Bereichen (238d) angeordnet ist.

13. Regal (230) nach Anspruch 12, wobei:
eine Länge (t7) des vierten Bereichs (238e) 50 mm oder mehr beträgt.

14. Energiespeichersystem (100), umfassend:
ein Regal nach einem der Ansprüche 1 bis 13,
mindestens eine Ablage (110), die in dem Regal untergebracht ist, wobei jede Ablage (110) mindestens eine Batterie umfasst.

## Revendications

1. Bâti (130, 230) pour un système de stockage d'énergie (100), le bâti étant prévu pour loger au moins un plateau (110), chaque plateau (110) comprenant au moins une batterie ;
dans lequel le bâti (130, 230) comprend au moins une unité formant étagère, chaque unité formant étagère étant agencée pour recevoir ledit plateau, chaque unité formant étagère comprenant :
une unité de support de plateau (120) pouvant être insérée et retirée du bâti (130, 230), l'unité de support de plateau (120) comprenant une première plaque pour supporter ledit plateau (110),
au moins une unité de fixation de plateau (138, 238) agencée pour contraindre le déplacement dudit plateau (110) dans une direction perpendiculaire à la première plaque ;
dans lequel le bâti (130, 230) comprend un châssis latéral (132), dans lequel la au moins une unité de fixation de plateau (138, 238) fait saillie vers l'intérieur à partir d'une partie du châssis latéral (132).

2. Bâti (130, 230) selon la revendication 1, dans lequel une distance entre l'unité de fixation de plateau (138, 238) et la première plaque (121) est de 0,5 mm ou moins.

3. Bâti (130, 230) selon la revendication 1 ou 2, dans lequel le bâti (130, 230) comprend un premier châssis latéral (133) et un deuxième châssis latéral (133), dans lequel chaque unité formant étagère comprend une plaque de guidage (137) formée entre le premier châssis latéral (133) et le deuxième châssis latéral (133), dans lequel la au moins une unité de fixation de plateau (138, 238) fait saillie vers l'intérieur à partir d'une première partie (137b) de la plaque de guidage (137), dans lequel ladite unité de transport de support de plateau (120) est agencée pour être insérée dans une partie située entre les châssis latéraux (133) le long de la plaque de guidage (137) et ayant une extrémité positionnée entre la plaque de guidage (137) et l'unité de fixation de plateau (138, 238).

4. Bâti (130, 230) selon la revendication 3, dans lequel le bâti (130, 230) comprend en outre un troisième châssis latéral (133) et un quatrième châssis latéral (133), dans lequel le premier châssis latéral (133) et le deuxième châssis latéral (133) sont positionnés sur un côté opposé du bâti par rapport au troisième châssis latéral (133) et au quatrième châssis latéral (133).

5. Bâti (130, 230) selon la revendication 4, dans lequel chaque unité formant étagère comprend :
un premier châssis de bâti (135) raccordant le premier châssis latéral (133) et le troisième châssis latéral (133) ; et
un second châssis de bâti (136) raccordant le deuxième châssis latéral (133) et le quatrième châssis latéral (133) ;
dans lequel le premier châssis de bâti (135) et le second châssis de bâti (136) sont agencés pour supporter ladite unité de support de plateau (120).

6. Bâti (130, 230) selon l'une quelconque des revendications 3 à 5, dans lequel la plaque de guidage (137) comprend une seconde partie (137a) qui est agencée pour supporter ladite unité de support de plateau (120).

7. Bâti (130, 230) selon l'une quelconque des revendications 3 à 6, dans lequel l'unité de fixation de plateau (138, 238) comprend :
une première région (138a, 238a) couplée à la première partie (137b) de la plaque de guidage (137), la première région (138a, 238a) étant adjacente à une première extrémité de l'unité de fixation de plateau (138, 238),
une deuxième région (138c, 238c) couplée à la plaque de guidage (137), la deuxième région (138c, 238c) étant adjacente à une seconde extrémité de l'unité de fixation de plateau (138, 238) ;
une paire de troisièmes régions (138d, 238d) faisant respectivement saillie de la première région (138a, 238a) et de la deuxième région (138c, 238c) dans une direction vers l'intérieur ; et
une quatrième région (138e, 238e) agencée entre la paire de troisièmes régions (138d, 238d), la quatrième région (138e, 238e) étant agencée pour contraindre le mouvement dudit plateau (110) dans une direction à distance de la première plaque (121).

8. Bâti (130) selon la revendication 7, dans lequel la paire de troisièmes régions (138d) est formée en fléchissant l'unité de fixation de plateau (138).

9. Bâti (130) selon la revendication 8, dans lequel :
une longueur (t1) de l'unité de fixation de plateau (138) entre les première et seconde extrémités est de 110 mm ou plus ; et/ou
la paire de troisièmes régions (138d) est agencée pour faire saillie vers l'intérieur selon une distance (t3) de 10 mm ou plus ; et/ou
une longueur (t4) de la quatrième région (138e) est de 60 mm ou plus.

10. Bâti (230) selon la revendication 7,
dans lequel l'unité de fixation plateau (238) comprend :
une plaque formée entre les première et seconde extrémités, et la paire de troisièmes régions (238d) et la quatrième région (238e) sont formées par une bride faisant saillie de la plaque.

11. Bâti (230) selon la revendication 10, dans lequel :
une longueur de l'unité de fixation de plateau (238) entre les première et seconde extrémités est de 110 mm ou plus ; et/ou
la bride est agencée pour faire saillie vers l'intérieur selon une distance (t6) de 10 mm ou plus.

12. Bâti (230) selon la revendication 10 ou 11,
dans lequel l'unité de fixation de plateau (238) comprend :
une paire de cinquièmes régions faisant respectivement saillie à partir de chacune de la paire de troisièmes régions (238d) dans une direction allant vers la première plaque (121), dans lequel la quatrième région (138e, 238e) est agencée entre la paire de cinquièmes régions (238d).

13. Bâti (230) selon la revendication 12, dans lequel :
une longueur (t7) de la quatrième région (238e) est de 50 mm ou plus.

14. Système de stockage d'énergie (100) comprenant :
un bâti selon l'une quelconque des revendications 1 à 13 ;
au moins un plateau (110) logé dans le bâti, chaque plateau (110) comprenant au moins une batterie.
